# EUROPÄISCHE PATENTSCHRIFT

(11) **EP 3 696 058 B1**
(45) Veröffentlichungstag und Bekanntmachung des Hinweises auf die Patenterteilung: **26.07.2023**
(21) Anmeldenummer: 20154763.5
(22) Anmeldetag: 31.01.2020
(51) Int. Cl.: B62D 21/12, B62D 27/06, B62D 63/02

(54) **FAHRZEUGKONSTRUKTION MIT ANSCHLUSSKNOTEN-KLEMMVERBINDUNG**
VEHICLE STRUCTURE WITH CONNECTION NODE CLAMP CONNECTION
CARROSSERIE DE VÉHICULE POURVUE DE LIAISON DE SERRAGE ET DE N UDS DE RACCORDEMENT

(30) Priorität: 15.02.2019 DE 102019103858
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Kondic, Darko, 85757 Karlsfeld (DE); Burger, Norbert, 84030 Ergolding (DE); Haag, Jens, 85757 Karlsfeld (DE)
(74) Vertreter: v. Bezold & Partner Patentanwälte - PartG mbB

(56) Entgegenhaltungen:
- EP-A1- 0 566 528
- EP-A1- 3 424 803
- EP-A1- 3 597 515
- WO-A1-2018/228688
- DE-A1- 10 341 349
- DE-U1-202006 003 228
- KR-A- 20180 040 978
- US-A1- 2008 035 814

## Beschreibung

Die Erfindung betrifft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis.

Zum allgemeinen Stand der Technik kann zunächst auf die DE 20 2006 003228 U1 und die US 2008/035814 A1 verwiesen werden, aus denen bereits Fahrzeugkonstruktionen mit mehreren Tragstrukturen bekannt sind. Die DE 20 2006 003228 U1 offenbart eine Fahrzeugkonstruktion gemäß dem Oberbegriff des Anspruchs 1.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbau- und Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Ein modular aufgebautes Fahrzeug-Chassis, dessen Tragstrukturen lösbar und folglich austauschbar miteinander verbunden sind, wäre demgegenüber deutlich flexibler.

Eine Aufgabe der Erfindung ist es, eine geeignete Verbindungsmöglichkeit für vorzugsweise Fahrzeug-Chassis-Module bildende Tragstrukturen für eine Fahrzeugkonstruktion zu schaffen

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion weist zumindest zwei Fahrzeug-Chassis-Module bildende Tragstrukturen auf, die jeweils zumindest einen Anschlussknoten umfassen.

Die Fahrzeugkonstruktion zeichnet sich vor allem dadurch aus, dass die Tragstrukturen vorzugsweise benachbarte Anschlussknoten umfassen und die benachbarten Anschlussknoten über eine Klemmverbindung z. B. lösbare miteinander verbunden werden können. Benachbarten Anschlussknoten bilden insbesondere ein Anschlussknoten-Paar.

Die Tragstrukturen sind vorzugsweise über mehrere, vorzugsweise vier, Anschlussknoten-Paare lösbar und/oder tragstrukturell miteinander verbunden.

Efindungsgemäß umfasst die Klemmverbindung einen oder mehrere Klemmbacken, z .B. zwei baugleiche oder zwei unterschiedliche Klemmbacken.

Außerdem umfasst die Klemmverbindung zumindest ein Spannelement (z. B. eine zentrale Spannschraube), und die zwei Klemmbacken über das Spannelement vorzugsweise im Wesentlichen in Querrichtung der Fahrzeugkonstruktion zueinander hin beaufschlagbar sind, um vorzugsweise die benachbarten Anschlussknoten im Wesentlichen in Längsrichtung zueinander hin zu beaufschlagen, und/oder das Spannelement sich im Wesentlichen in Querrichtung der Fahrzeugkonstruktion (100) erstreckt. Die Spannrichtung, z. B. Verschraubungsrichtung, kann folglich vorzugsweise im Wesentlichen der Querrichtung der Fahrzeugkonstruktion entsprechen.

Die Klemmverbindung kann z. B. auch zwei Spannelemente aufweisen, z. B. jeweils ein Spannelement pro Anschlussknoten.

Im Kontext der Erfindung können die zwei Klemmbacken relativ zu den benachbarten Anschlussknoten z. B. lösbare und/oder separate Bauteile sein, wobei es auch möglich ist, dass einer der Klemmbacken unlösbar, z. B. einstückig-integral, an einem der benachbarten Anschlussknoten ausgebildet ist, z. B. angeformt, angegossen, angeschmiedet, angeschweißt, etc. ist.

Einer der Klemmbacken kann somit z. B. unlösbar und/oder einstückig integral an einem der benachbarten Anschlussknoten ausgebildet sein.

Das Spannelement erstreckt sich im Wesentlichen in Querrichtung der Fahrzeugkonstruktion und ist z. B. von seitlich außen zum Spannen und/oder Lösen betätigbar. Zwei Tragstrukturen können somit vorzugsweise ausschließlich über im Wesentlichen in Querrichtung der Fahrzeugkonstruktion ausgerichtete und/oder betätigbare Spannelemente miteinander verbunden sein.

Die zwei Klemmbacken können z. B. im Wesentlichen U- oder C-förmig ausgebildet sein und/oder einen z. B. sandwichförmigen Formschluss mit den benachbarten Anschlussknoten im Wesentlichen in Längsrichtung der Fahrzeugkonstruktion bilden. Dadurch können z. B. Zugkräfte in Längsrichtung der Fahrzeugkonstruktion vorzugsweise formschlüssig übertragen werden.

Zumindest einer der Klemmbacken kann z. B. über zumindest einen sandwichförmigen Eingriff einen Formschluss mit zumindest einem der benachbarten Anschlussknoten im Wesentlichen in Höhenrichtung der Fahrzeugkonstruktion bilden. Dadurch können z. B. auf- und abwärts gerichtete Kräfte, insbesondere Schubkräfte, im Wesentlichen in Höhenrichtung der Fahrzeugkonstruktion vorzugsweise formschlüssig übertragen werden.

Es ist möglich, dass das Spannelement die zwei Klemmbacken im Wesentlichen in Querrichtung der Fahrzeugkonstruktion zueinander hin beaufschlagt und/oder die zwei Klemmbacken die benachbarten Anschlussknoten im Wesentlichen in Längsrichtung der Fahrzeugkonstruktion zueinander hin beaufschlagen, z. B. über eine Kraftumlenkung mittels der unten beschriebenen Kulissen.

Es ist möglich, dass die benachbarten Anschlussknoten z. B. zur Anlage der Klemmbacken zwei im Wesentlichen komplementär geformte (z. B. im Wesentlichen U-, Omega- oder C-förmige) Kulissen bilden.

Die (vorzugsweise schräge Anlagenflächen aufweisende) Kulissen können z. B. mit den Klemmbacken eine Kraftumlenkung erzeugen, so dass die benachbarten Anschlussknoten zueinander hin beaufschlagt werden können, insbesondere im Wesentlichen in Längsrichtung der Fahrzeugkonstruktion.

Es ist möglich, dass die Fahrzeugkonstruktion sich im Einsatz (insbesondere im Fahrbetrieb) in deren Höhenrichtung auf- und ab-bewegt, wodurch Zug- und Druckkräfte und Schubkräfte erzeugt werden können.

Bei einer Ausführungsform der Erfindung können die Klemmbacken tragstrukturell zur Übertragung von im Einsatz der Fahrzeugkonstruktion erzeugten Zugkräften dienen, z. B. im Wesentlichen in Längsrichtung der Fahrzeugkonstruktion. Alternativ oder ergänzend können die benachbarten Anschlussknoten z. B. innenliegende Stirnseiten aufweisen und die innenliegenden Stirnseiten können tragstrukturell miteinander in Verbindung gebracht werden, zur Übertragung von im Einsatz der Fahrzeugkonstruktion erzeugten Druckkräften, z. B. im Wesentlichen in Längsrichtung der Fahrzeugkonstruktion.

Auf- und abwärts gerichtete Kräfte, insbesondere Schubkräfte, in Höhenrichtung der Fahrzeugkonstruktion können wie schon zuvor erwähnt z. B. über einen Formschluss zwischen zumindest einer Klemmbacke und zumindest einem der beiden Anschlussknoten vorzugsweise formschlüssig übertragen werden.

Es ist möglich, dass die benachbarten Anschlussknoten eine Durchlassöffnung für das Spannelement bilden und das Spannelement durch die Durchlassöffnung geführt ist, z. B. zumindest abschnittsweise ohne die benachbarten Anschlussknoten zu kontaktieren.

Die Durchlassöffnung und die innenliegenden Stirnseiten können sich z. B. benachbart und/oder parallel zueinander erstrecken.

Es ist möglich, dass die Klemmbacken sich im Wesentlichen in Längsrichtung der Fahrzeugkonstruktion erstrecken und/oder das Spannelement sich im Wesentlichen in Querrichtung der Fahrzeugkonstruktion erstreckt.

Die benachbarten Anschlussknoten weisen jeweils zumindest eine Anschlusseinrichtung zum Anschließen z. B. eines Längsträgersegments, und eines Vertikalträgersegments auf. Die zumindest eine Anschlusseinrichtung kann auch zum Anschließen eines Querträgersegments ausgebildet sein.

Die Anschlusseinrichtung kann z. B. eine im Wesentlichen U-, Omega- oder C-förmige Anschlussfläche aufweisen und zwar insbesondere zur z. B. passgenauen Anlage des Längsträgersegments, des Querträgersegments und/oder des Vertikalträgersegments. Dabei ist es z. B. möglich, dass die Anschlusseinrichtung dazu dient, das Längsträgersegment, das Querträgersegments und/oder das Vertikalträgersegment von innen zu halten.

Es ist möglich, dass die benachbarten Anschlussknoten aus jeweils einem im Wesentlichen U-, Omega- oder C-Profil gebildet sind und/oder zweckmäßig zusammen eine im Wesentlichen H-Form bilden, vorzugsweise bei Betrachtung in Höhenrichtung der Fahrzeugkonstruktion, und/oder zur z. B. sandwichförmigen Aufnahme eines Längsträgersegment, eines Querträgersegment und/oder eines Vertikalträgersegments, insbesondere eines Teilabschnitts davon, dienen.

Es ist möglich, dass die Tragstrukturen jeweils ein Fahrzeug-Chassis-Modul/Fahrgestell bilden.

Es ist möglich, dass die Längsträgersegmente der Tragstrukturen über benachbarte Anschlussknoten, also insbesondere Anschlussknoten-Paare, miteinander verbunden sind und in Querrichtung der Fahrzeugkonstruktion voneinander beabstandete Chassis-Längsträgerkonstruktionen bilden.

Im Kontext der Erfindung können somit insbesondere Zug- und/oder Druckkräfte in den Längsträgersegmenten über die benachbarten Anschlussknoten vorteilhaft übertragen werden.

Es ist möglich, dass die Tragstrukturen über zumindest zwei, zumindest drei oder zumindest vier Anschlussknoten-Paare insbesondere lösbar miteinander verbunden sind.

Bevorzugt ist aber, dass die Tragstrukturen über jeweils exakt vier Anschlussknoten-Paare lösbar miteinander verbunden sind. Es können alle vier oder nur einige der vier Anschlussknoten-Paare, z. B. nur zwei der Anschlussknoten-Paare, mit der Klemmverbindung wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die benachbarten Anschlussknoten können z. B. jeweils zumindest eine Anbindungsstruktur (z. B. zumindest ein Loch und/oder zumindest einen Bolzen etc.) zur Anbindung einer Montagestruktur (z. B. ein Lochblech, ein Winkel-Lochblech etc.) vorzugsweise eines Fahrzeugaufbaus, einer Fahrzeugbatterie und/oder eines Fahrzeugtanks (z. B. Kraftstofftank, Reduktionsmitteltank, Drucklufttank etc.) umfassen.

Der Fahrzeugaufbau kann z. B. eine Sattelkupplung, eine Wechselbrücke, ein Abrollkipper, ein Müllsammelfahrzeug und/oder einen Kofferaufbau (z. B. Kühlkoffer-Aufbau) umfassen.

Die Montagestruktur kann zweckmäßig an beide benachbarte Anschlussknoten montiert werden und somit vorzugsweise zur Struktursteifigkeit der benachbarten Anschlussknoten beitragen und/oder das Spannelement überbrücken.

Zumindest eine Anbindungsstruktur kann z. B. im Wesentlichen in Querrichtung und/oder Höhenrichtung der Fahrzeugkonstruktion ausgerichtet sein und/oder zumindest ein Montageloch aufweisen. Dadurch ist eine Montage von seitlichen außen möglich. Allerdings kann zumindest eine Anbindungsstruktur auch z. B. im Wesentlichen in Höhenrichtung der Fahrzeugkonstruktion ausgerichtet sein.

Die Fahrzeugkonstruktion kann z. B. zumindest zwei, zumindest drei, zumindest vier oder sogar zumindest fünf Tragstrukturen, wie zweckmäßig hierin offenbart, aufweisen. So ist es möglich, dass z. B. eine Tragstruktur eine Fahrzeug-Vorderachse trägt und/oder eine Tragstruktur eine Fahrzeug-Hinterachse trägt. Des Weiteren kann z. B. zwischen einer Fahrzeug-Vorderachse und einer Fahrzeug-Hinterachse zumindest eine Tragstruktur angeordnet sein.

Die Chassis-Längsträgerkonstruktionen sind zweckmäßig über die benachbarten Anschlussnoten vorzugsweise nicht einstückig-integral durchlaufend ausgeführt, sondern in deren Längsrichtung modular gestückelt ausgebildet.

Es ist möglich, dass die Tragstrukturen insbesondere lösbar tragstrukturell und/oder wiederholt montierbar miteinander verbunden sind, z. B. über die benachbarten Anschlussknoten.

Es ist möglich, dass die Tragstrukturen jeweils beidseitig zwei in Höhenrichtung der Fahrzeugkonstruktion voneinander beabstandete Längsträgersegmente aufweisen, und/oder beidseitig zwei in Längsrichtung der Fahrzeugkonstruktion voneinander beabstandete Vertikalträgersegmente aufweisen. Alternativ oder ergänzend kann zumindest eine der Tragstrukturen auch z. B. diagonal verlaufende Trägersegmente aufweisen.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Die benachbarten Anschlussknoten können zweckmäßig z. B. lösbar oder unlösbar miteinander verbunden sein und/oder jeweils ein Anschlussknoten-Paar bilden.

Es ist möglich, dass die benachbarten Anschlussknoten jeweils zur (vorzugsweise lösbaren und/oder wiederholt montierbaren Verbindung oder unlösbaren Verbindung) mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass benachbarte Anschlussknoten in Längsrichtung der Fahrzeugkonstruktion auf Stoß aneinander anliegen, und/oder über jeweils eine im Wesentlichen in Höhen- und in Querrichtung der Fahrzeugkonstruktion ausgerichtete Schnittebene voneinander trennbar sind.

Die jeweilige Tragstruktur kann z. B. vier vordere Anschlussknoten und vier hintere Anschlussknoten aufweisen, wobei die vier vorderen Anschlussknoten und die vier hinteren Anschlussknoten z. B. Eckpunkte der jeweiligen Tragstruktur bilden können.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Tragstrukturen können vorzugsweise mit z. B. unterschiedlichen Funktionskomponenten ausgestattet sein (z. B. einer oder mehreren Batterien, Energiespeichersystemen (z. B. Wasserstofftanks oder Gastanks), Traktionsbatterien, Druckluft-Tanks, Kraftstoff-Tanks, Reduktionsmittel-Tanks, Motoren, Steuerungseinrichtungen, Pumpen- und/oder Kühlsystemen, Beladungs- und/oder Betankungssystemen, und/oder Luftaufbereitungsystemen (z. B. Luftpresser) etc.).

Die Fahrzeugkonstruktion ist vorzugsweise modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen. Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die benachbarten Anschlussknoten können jeweils z. B. als ein Blechteil oder ein Guss-, Schmiede- oder Frästeil ausgebildet sein und folglich vorzugsweise mittels eines Guss-, Schmiede- oder Fräsverfahrens hergestellt sein.

Die Erfindung umfasst auch ein Gesamtfahrzeug z. B. in Form eines Nutzfahrzeugs, vorzugsweise ein Lastkraftwagen (z. B. Sattelzugmaschine und/oder Transporter und/oder Chassis), mit einer Fahrzeugkonstruktion wie hierin offenbart.

Die zuvor beschriebenen bevorzugten Ausführungsformen und Merkmale der Erfindung sind beliebig miteinander kombinierbar, soweit sie in den Schutzbereich der beifügten Ansprüche fallen. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Explosionsdarstellung einer Fahrzeugkonstruktion gemäß einer Ausführungsform der Erfindung,
- Figur 2: zeigt eine perspektivische Darstellung der Fahrzeugkonstruktion der Figur 1 in zusammengebautem Zustand,
- Figur 3: zeigt eine vergrößerte Darstellung der Fahrzeugkonstruktion der Figuren 1 und 2,
- Figuren 4 bis 6: zeigen vergrößerte Darstellungen der Fahrzeugkonstruktion der Figuren 1 bis 3,
- Figur 7: zeigt eine perspektivische Explosionsdarstellung einer Fahrzeugkonstruktion gemäß einer anderen Ausführungsform der Erfindung,
- Figur 8: zeigt ein Anschlussknoten-Konzept gemäß einer Ausführungsform der Erfindung,
- Figur 9: zeigt eine Draufsicht auf das Anschlussknoten-Konzept der Figur 8,
- Figur 10: zeigt eine Schnittansicht des Anschlussknoten-Konzepts der Figuren 8 und 9,
- Figur 11: zeigt eine perspektivische Darstellung des Anschlussknoten-Konzepts der Figuren 8 bis 10, insbesondere mit beispielhaften Montagestrukturen,
- Figur 12: zeigt eine perspektivische Darstellung des Anschlussknoten-Konzepts der Figuren 8 bis 10, insbesondere mit beispielhaften Montagestrukturen, und
- Figur 13: zeigt ein Anschlussknoten-Konzept gemäß einer anderen Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

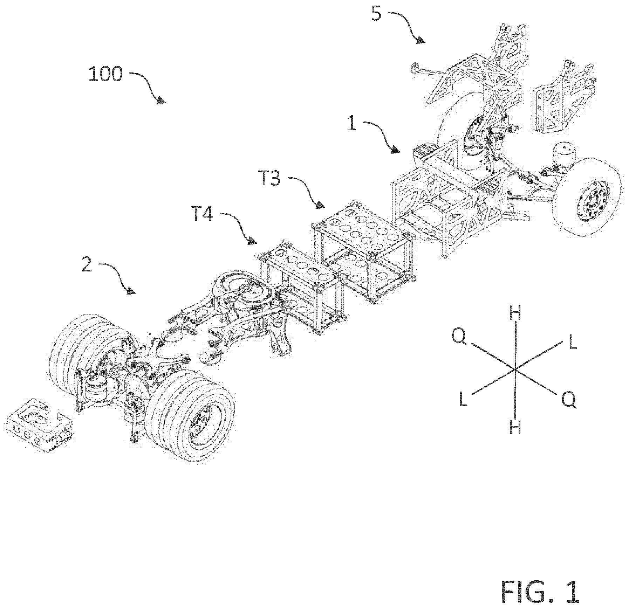

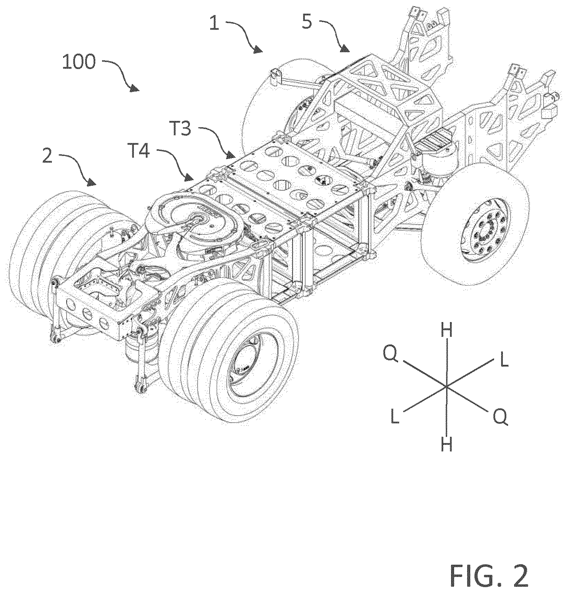

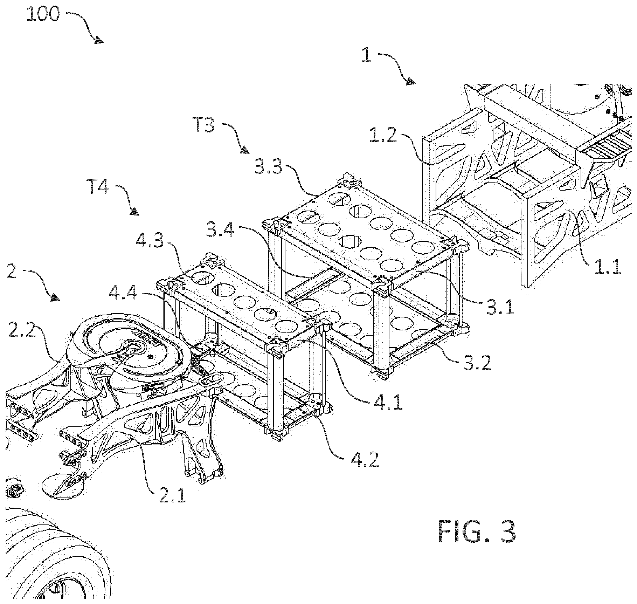

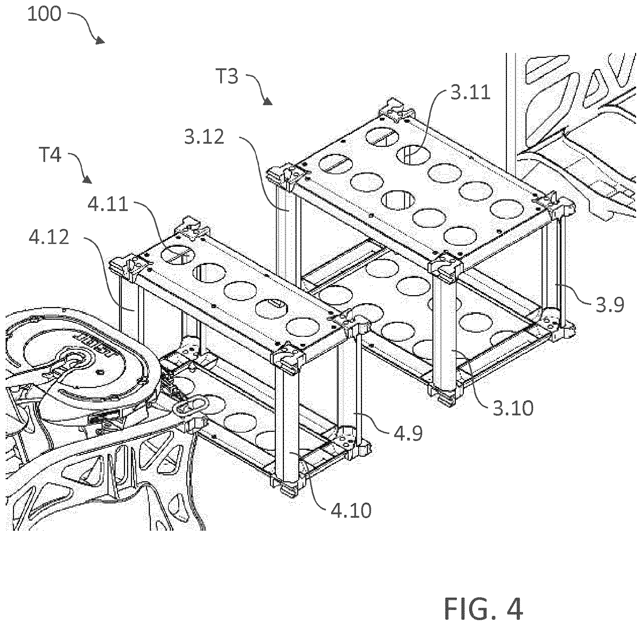

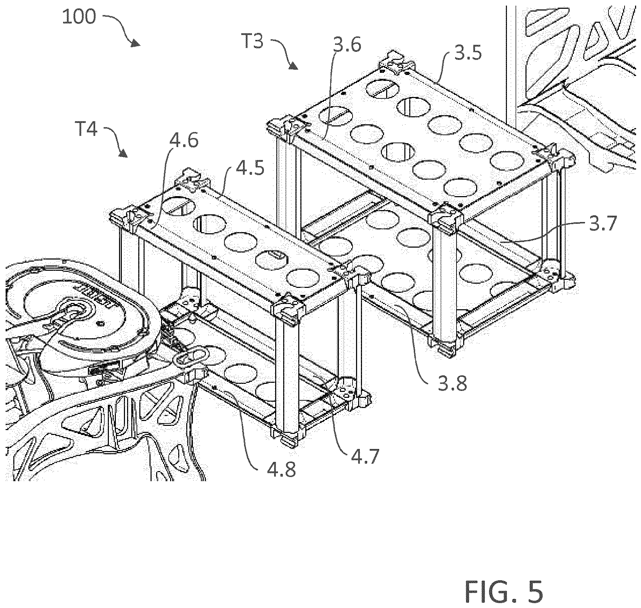

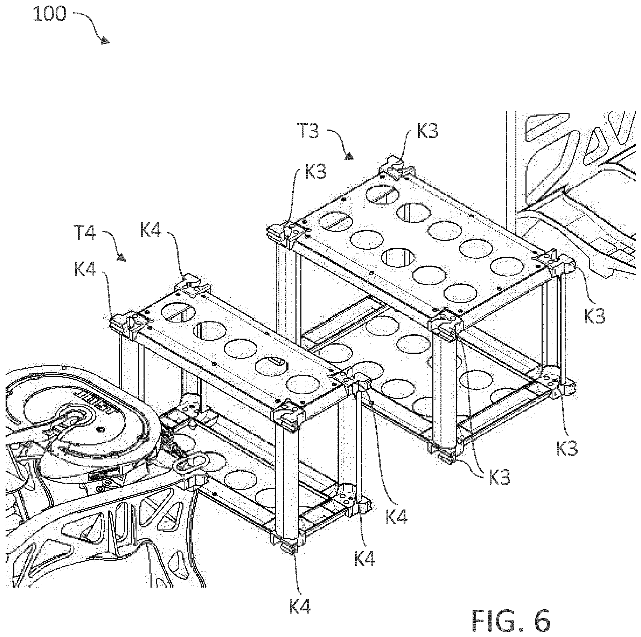

Eine beispielhafte Fahrzeugkonstruktion 100 gemäß einer Ausführungsform der Erfindung wird nachfolgend unter Bezugnahme auf die Figuren 1 bis 6 beschrieben.

Die Fahrzeugkonstruktion 100 ist als ein in seiner Längsrichtung L tragstrukturell und vorzugsweise funktionell modular aufgebautes Fahrzeug-Chassis für ein Gesamtfahrzeug in Form eines Nutzfahrzeugs, insbesondere einer Sattelzugmaschine, ausgeführt.

Die Fahrzeugkonstruktion 100 kann z. B. ein mit Rädern versehenes Vorderachsmodul 1 und ein z. B. mit einer Zwillingsbereifung versehenes Hinterachsmodul 2 umfassen. Auf das Vorderachsmodul 1 kann ein optionales Modul 5 zur Aufnahme einer Nutzfahrzeug-Kabine aufgesetzt sein. Das Vorderachsmodul 1 umfasst eine Fahrzeug-Vorderachse und das Hinterachsmodul 2 umfasst eine Fahrzeug-Hinterachse.

Zwischen dem Vorderachsmodul 1 und dem Hinterachsmodul 2 sind zwei in Längsrichtung L der Fahrzeugkonstruktion 100 benachbarte Tragstrukturen T3, T4 angeordnet, nämlich beispielhaft eine erste Tragstruktur T3 und eine zweite Tragstruktur T4, wobei im Kontext der Erfindung die Tragstrukturen T3, T4 alternativ oder ergänzend auch an anderer Stelle positioniert sein können. Die Tragstrukturen T3, T4 bilden jeweils ein Fahrzeug-Chassis-Modul.

Die Tragstruktur T3 umfasst in Querrichtung Q der Fahrzeugkonstruktion 100 voneinander beabstandete Längsträgersegmente 3.1 bis 3.4, wobei die Längsträgersegmente 3.1 bis 3.4 in Querrichtung Q der Fahrzeugkonstruktion 100 voneinander beabstandete Chassis-Längsträgerkonstruktionen bilden.

Die Tragstruktur T4 umfasst ebenfalls in Querrichtung Q der Fahrzeugkonstruktion 100 voneinander beabstandete Längsträgersegmente 4.1 bis 4.4, wobei die Längsträgersegmente 4.1 bis 4.4 in Querrichtung Q der Fahrzeugkonstruktion 100 voneinander beabstandete Chassis-Längsträgerkonstruktionen bilden.

Die zwei Chassis-Längsträgerkonstruktionen der Fahrzeugkonstruktion 100 sind somit z. B. nicht einstückig-integral durchlaufend vom Vorderachsmodul 1 zum Hinterachsmodul 2, sondern in Längsrichtung L der Fahrzeugkonstruktion 100 gestückelt ausgebildet.

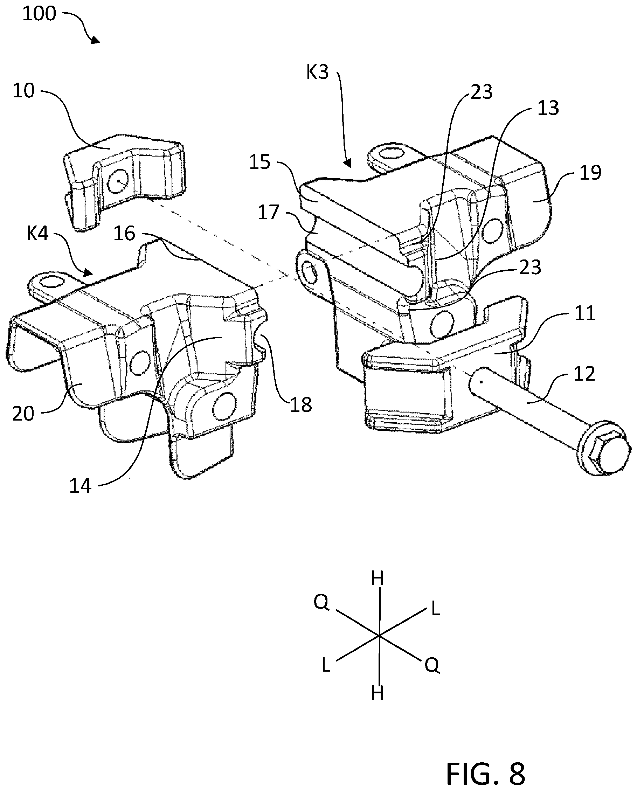

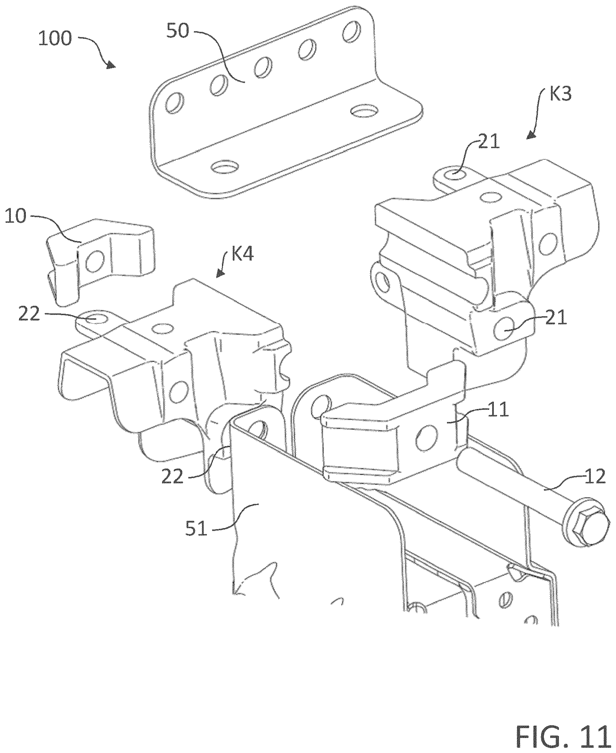

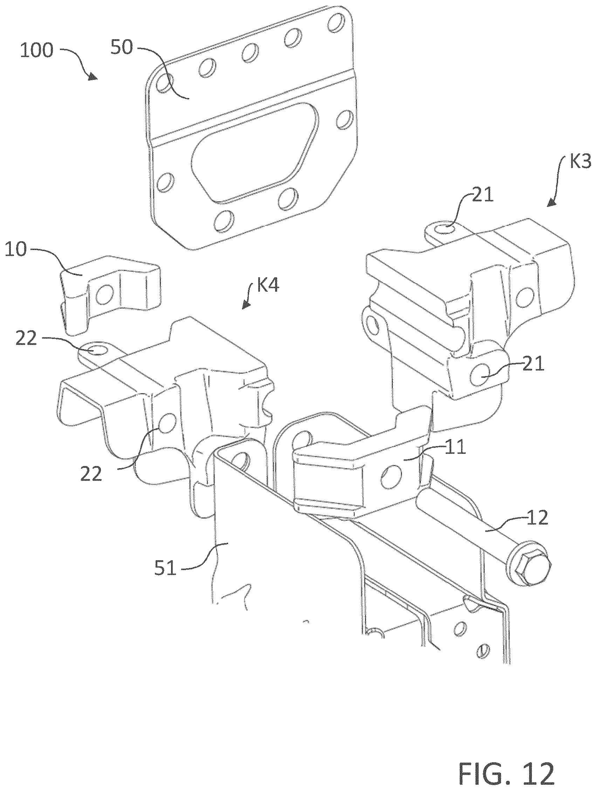

Die Tragstruktur T3 umfasst z. B. acht Anschlussknoten K3 und die Tragstruktur K4 umfasst z. B. acht Anschlussknoten K4. Alle oder zumindest einige der Anschlussknoten K3 und K4 können insbesondere wie in den Figuren 8 bis 13 gezeigt ausgeführt sein und z. B. vorteilhaft über eine Klemmverbindung miteinander verbunden werden.

Die Tragstruktur T3 umfasst insbesondere beidseitig zwei in Höhenrichtung H der Fahrzeugkonstruktion 100 voneinander beabstandete Längsträgersegmente 3.1 bis 3.4 und beidseitig zwei in Längsrichtung L der Fahrzeugkonstruktion 100 voneinander beabstandete Vertikalträgersegmente 3.9 bis 3.12 und zusätzlich zwei obere in Längsrichtung L der Fahrzeugkonstruktion 100 voneinander beabstandete Querträgersegmente 3.5 bis 3.6 und zwei untere in Längsrichtung L der Fahrzeugkonstruktion 100 voneinander beabstandete Querträgersegmente 3.7 bis 3.8. Die erste Tragstruktur T3 nimmt dadurch z. B. eine im Wesentlichen quaderförmige Gestalt an, kann aber auch andere geometrische Formen aufweisen.

Die Tragstruktur T3 umfasst insbesondere vier vordere Anschlussknoten und vier hintere Anschlussknoten, die einheitlich mit dem Bezugszeichen K3 versehen sind. Die Anschlussknoten K3 dienen zur zweckmäßig lösbaren oder unlösbaren Verbindung mit jeweils einem Längsträgersegment 3.1 bis 3.4 und optional einem Querträgersegment 3.5 bis 3.8 und/oder einem Vertikalträgersegment 3.9 bis 3.12.

Die Tragstruktur T4 umfasst ebenfalls beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich zwei obere in Längsrichtung L der Fahrzeugkonstruktion 100 voneinander beabstandete Querträgersegmente 4.5 bis 4.6 und zwei untere in Längsrichtung L der Fahrzeugkonstruktion 100 voneinander beabstandete Querträgersegmente 4.7 bis 4.8. Die zweite Tragstruktur T4 nimmt dadurch eine im Wesentlichen quaderförmige Gestalt an.

Die Tragstruktur T4 umfasst darüber hinaus zweckmäßig vier vordere Anschlussknoten und zweckmäßig vier hintere Anschlussknoten, die einheitlich mit dem Bezugszeichen K4 versehen sind. Die Anschlussknoten K4 dienen zur zweckmäßig lösbaren oder unlösbaren Verbindung mit jeweils einem Längsträgersegment 4.1 bis 4.4 und optional einem Querträgersegment 4.5 bis 4.8 und/oder einem Vertikalträgersegment 4.9 bis 4.12.

Benachbarte Anschlussknoten K3, K4 der ersten Tragstruktur T3 und der zweiten Tragstruktur T4 (in den in den Figuren 1 bis 7 gezeigten Ausführungsformen vier Anschlussknoten-Paare) sind lösbar aneinander montiert und dienen somit zusätzlich dazu, die erste Tragstruktur T3 lösbar mit der zweiten Tragstruktur T4 zu verbinden.

Die Längsträgersegmente 3.1 bis 3.4 der ersten Tragstruktur T3 und die Längsträgersegmente 4.1 bis 4.4 der zweiten Tragstruktur T4 sind folglich über z. B. vier Anschlussknoten-Paare in Längsrichtung L der Fahrzeugkonstruktion 100 lösbar und vorzugsweise tragstrukturell miteinander verknüpft.

Benachbarte Anschlussknoten und somit Anschlussknoten-Paare K3, K4 liegen zweckmäßig im Wesentlichen in Längsrichtung L der Fahrzeugkonstruktion 100 auf Stoß aneinander und/oder sind über jeweils eine im Wesentlichen in Höhen- und in Querrichtung H und Q der Fahrzeugkonstruktion 100 ausgerichtete Schnittebene voneinander trennbar.

Auch das Vorderachsmodul 1 kann über Anschlussknoten-Paare mit der Tragstruktur T3 verbunden sein, während das Hinterachsmodul 2 über Anschlussknoten-Paare mit der Tragstruktur T4 verbunden sein kann.

Die erste Tragstruktur T3 umfasst optional eine obere Platte und eine untere Platte z. B. zum Tragen von Funktionskomponenten und/oder zur Aussteifung der Tragstruktur T3, wobei die zweite Tragstruktur T4 ebenfalls optional eine obere Platte und eine untere Platte z. B. zum Tragen von Funktionskomponenten und/oder zur Aussteifung der Tragstruktur T4 umfasst.

Im Bedarfsfall können nachträglich eine oder mehrere der hierin offenbarten Tragstrukturen T3 und T4 ausgetauscht werden und somit das Anwendungsprofil des Gesamtfahrzeugs im Laufe der Fahrzeuglebensdauer relativ einfach verändert werden.

Sämtliche spezifischen Funktionskomponenten können z. B. innerhalb der jeweiligen Tragstruktur T3, T4 abgebildet werden. Beispielsweise können alle Funktionskomponenten zur Luftaufbereitung in einem Technikmodul (z. B. Tragstruktur T3) zusammengefasst werden, wohingegen z. B alle Funktionskomponenten einer Traktionsbatterie in einem Energiemodul (z. B. Tragstruktur T4) zusammengefasst werden können. Werden im Laufe des Produktlebenszyklus Funktionskomponenten verändert, hinzugefügt oder eliminiert, reduziert sich z. B. der Dokumentationsaufwand nur auf die jeweilige Tragstruktur T3, T4, ohne auf die Gesamtfahrzeug-Dokumentation Bezug nehmen zu müssen.

Die Längsträgersegmente 3.1-3.4, 4.1-4.4, die Querträgersegmente 3.5-3.8, 4.5-4.8 und die Vertikalträgersegmente 3.9-3.12, 4.9-4.12 sind vorzugsweise jeweils im Wesentlichen parallel zum rechtwinkligen Koordinatensystem L-Q-H ausgerichtet, können abweichend hierzu aber auch zumindest leicht schräg verlaufen.

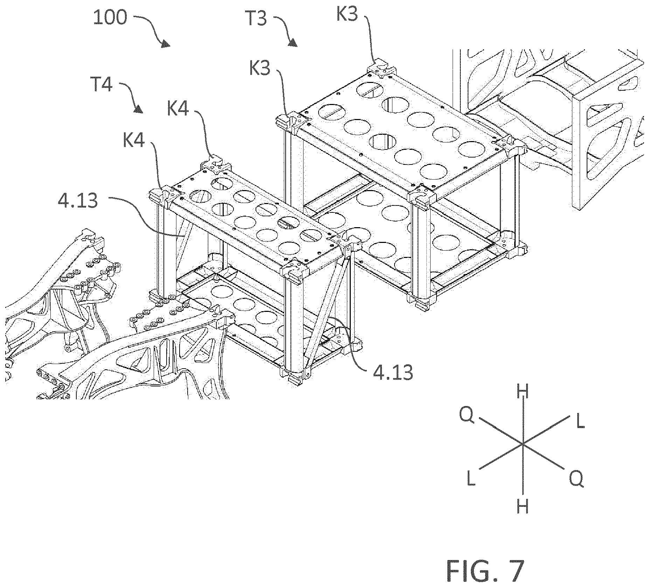

Figur 7 zeigt eine beispielhafte Fahrzeugkonstruktion 100 gemäß einer Ausführungsform der Erfindung, die im Wesentlichen der Ausführungsform der Figuren 1 bis 6 entsprechen kann.

Eine Besonderheit ist aber, dass die Tragstruktur T4 zwei in jeweils einer im Wesentlichen vertikalen Ebene ausgerichtete Diagonalverstrebungen 4.13 zur Aussteifung der Tragstruktur T4 umfasst, wobei sich die jeweilige vertikale Ebene in Längsrichtung L der Fahrzeugkonstruktion 100 erstreckt. Alternativ oder ergänzend zu den Diagonalverstrebungen 4.13 können Platten verwendet werden. Die Tragstruktur T3 kann ebenfalls derartige Diagonalverstrebungen und/oder Platten umfassen, sofern erforderlich. Die Diagonalverstrebungen 4.13 können lösbar oder nicht lösbar sein.

Die hierhin erwähnten Platten und/oder Diagonalverstrebungen dienen vorzugsweise zur Erhöhung insbesondere der Torsionssteifigkeit der zugehörigen Tragstruktur T3, T4 und können z. B. in seitlicher Anordnung zumindest einen Teil einer Seitencrasheinrichtung zum Schutz der Funktionskomponenten vor einem Seitenaufprall bilden.

Die Figuren 8 bis 12 zeigen unterschiedliche Ansichten eines Anschlussknoten-Konzepts gemäß einer Ausführungsform der Erfindung, gemäß dessen zumindest einige der unter Bezugnahme auf die Figuren 1 bis 7 beschriebenen Anschlussknoten K3 und K4 vorzugsweise ausgeführt werden können. Das Anschlussknoten-Konzept wird nachfolgend unter gemeinsamer Bezugnahme auf die Figuren 8 bis 12 beschrieben.

Figur 8 zeigt insbesondere benachbarte Anschlussknoten, nämlich einen Anschlussknoten K3 einer Tragstruktur T3 und einen Anschlussknoten K4 einer Tragstruktur T4, zur Ausbildung eines Anschlussknoten-Paars.

Eine Besonderheit ist, dass die benachbarten Anschlussknoten K3, K4 (und somit das Anschlussknoten-Paar K3, K4) über eine Klemmverbindung miteinander verbunden werden können. Die Klemmverbindung umfasst zwei im Wesentlichen U-, Omega- oder C-förmige Klemmbacken 10 und 11. Die zwei Klemmbacken 10, 11 sind relativ zu den benachbarten Anschlussknoten K3, K4 lösbare Bauteile. Im Kontext der Erfindung ist es aber z. B. möglich, dass z. B. der Klemmbacken 10 unlösbar und einstückig-integral z. B. am Anschlussknoten K3 oder Anschlussknoten K4 zur Verfügung gestellt ist, z. B. angegossen, angeschmiedet, angeschweißt, etc. ist.

Die benachbarten Anschlussknoten K3, K4 bilden zur vorzugsweise passgenauen Anlage der Klemmbacken 10 und 11 zwei komplementär und somit ebenfalls im Wesentlichen U-, Omega oder C-förmig geformte Kulissen 13 und 14 zum sandwichförmigen Formschluss-Eingriff mit den Klemmbacken 10 und 11 im Wesentlichen in Längsrichtung L der Fahrzeugkonstruktion 100. Die Kulissen 13, 14 erzeugen mit den Klemmbacken 10, 11 eine Kraftumlenkung, mittels der die benachbarten Anschlussknoten K3, K4 in Längsrichtung L der Fahrzeugkonstruktion 100 zueinander hin beaufschlagt werden.

Der Klemmbacken 11 bildet einen Formschluss 23 mit den benachbarten Anschlussknoten K3, K4 im Wesentlichen in Höhenrichtung H der Fahrzeugkonstruktion 100. Der Formschluss 23 kann z. B. über zumindest einen sandwichförmigen Eingriff des Klemmbackens 11 mit den benachbarten Anschlussknoten K3, K4 gebildet werden. Der Klemmbacken 10 kann optional ebenfalls einen derartigen Formschluss in Höhenrichtung H der Fahrzeugkonstruktion 100 bilden.

Die Klemmbacken 10 und 11 sind über ein Spannelement 12 (z. B. eine zentrale Spannschraube) im Wesentlichen in Querrichtung Q der Fahrzeugkonstruktion 100 zueinander hin beaufschlagbar, wodurch die benachbarten Anschlussknoten K3, K4 zweckmäßig über die Kulissen 13, 14 im Wesentlichen in Längsrichtung L der Fahrzeugkonstruktion 100 zueinander hin beaufschlagt werden.

Auch Ausführungsformen mit zwei Spannelementen 12 sind möglich, z. B. jeweils ein Spannelement pro Anschlussknoten K3, K4.

Die benachbarten Anschlussknoten K3, K4 bilden eine Durchlassöffnung 17, 18 für das Spannelement 12, wobei das Spannelement 12 durch die Durchlassöffnung 17,18 geführt ist und zwar vorzugsweise so, dass es die benachbarten Anschlussknoten K3, K4 nicht kontaktiert.

Die Klemmbacken 10 und 11 erstrecken sich im Wesentlichen in Längsrichtung L der Fahrzeugkonstruktion 100, während sich das Spannelement 12 im Wesentlichen in Querrichtung Q der Fahrzeugkonstruktion 100 erstreckt.

Der Anschlussknoten K3 umfasst eine Anschlusseinrichtung 19 zum Anschließen eines in Figur 8 nicht gezeigten Längsträgersegments. Der Anschlussknoten K3 umfasst ferner eine Anschlusseinrichtung zum Anschließen eines in Figur 8 nicht gezeigten Vertikalträgersegments und kann optional eine Anschlusseinrichtung zum Anschließen eines Querträgersegments aufweisen.

Der Anschlussknoten K4 umfasst ebenfalls eine Anschlusseinrichtung 20 zum Anschließen eines in Figur 8 nicht gezeigten Längsträgersegments. Der Anschlussknoten K4 umfasst ferner eine Anschlusseinrichtung zum Anschließen eines in Figur 8 nicht gezeigten Vertikalträgersegments und kann optional eine Anschlusseinrichtung zum Anschließen eines Querträgersegments aufweisen.

Der Anschlussknoten K3 kann darüber hinaus z. B. mehrere Anbindungsstrukturen 21 (z. B. Befestigungslöcher) zur Anbindung einer oder mehrerer Montagestrukturen 50, 51 aufweisen. Ebenso kann der Anschlussknoten K4 z. B. mehrere Anbindungsstrukturen 22 (z. B. Befestigungslöcher) zur Anbindung einer oder mehrerer Montagestrukturen 50, 51 aufweisen.

Die Montagestrukturen 50, 51 können z. B. Teil eines Fahrzeugaufbaus, Teil einer Fahrzeugbatterie und/oder Teil eines Fahrzeugtanks sein. Die Montagestrukturen 50, 51 können zweckmäßig an nur einen einzigen Anschlussknoten K3, K4 montiert sein oder aber z. B. mittels Überbrückung des Spannelements 12 an beide, z. B. um die Struktursteifigkeit der benachbarten Anschlussknoten K3, K4, also des Anschlussknoten-Paars, zu erhöhen.

Die Anbindungsstrukturen 21, 22 können im Wesentlichen in Querrichtung Q und/oder in Höhenrichtung H der Fahrzeugkonstruktion (100) ausgerichtet sein und vorzugsweise zumindest ein Montageloch umfassen.

Im Einsatz der Fahrzeugkonstruktion 100 wird die Fahrzeugkonstruktion 100 in deren Höhenrichtung H üblicherweise auf- und ab-bewegt, wodurch in den Tragstrukturen T3, T4 und zwar insbesondere in den Längsträgersegmenten 3.1 bis 3.4 und 4.1 bis 4.4 Zug- und Druckkräfte erzeugt werden.

Zur Übertragung von im Einsatz der Fahrzeugkonstruktion 100 erzeugten Druckkräften in den Längsträgersegmenten 3.1 bis 3.4 und 4.1 bis 4.4 können die benachbarten Anschlussknoten K3, K4 innenliegende Stirnseiten 15 und 16 aufweisen, die zweckmäßig auf Stoß aneinander liegen können und tragstrukturell miteinander in Verbindung bringbar sind.

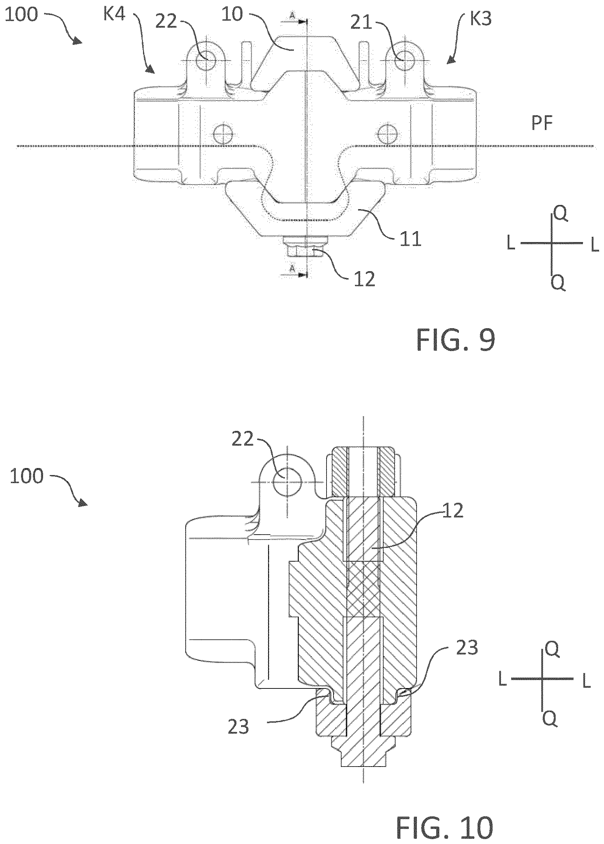

Zur Übertragung von im Einsatz der Fahrzeugkonstruktion 100 erzeugten Zugkräften in den Längsträgersegmenten 3.1 bis 3.4 und 4.1 bis 4.4 dienen insbesondere die Klemmbacken 10 und 11, wie insbesondere Figur 9 und dem dort gezeigten Kraftfluss PF entnommen werden kann. Die Klemmbacken 10 und 11 sind somit vorzugsweise tragstruktureller Teil der Längsträgersegmente 3.1 bis 3.4 und 4.1 bis 4.4 und folglich tragstruktureller Teil der Chassis-Längsträgerkonstruktion(en). Die Klemmbacken 10 und 11 können insbesondere als tragstruktureller Bypass zur Umgehung des Spannelements 12 genutzt werden.

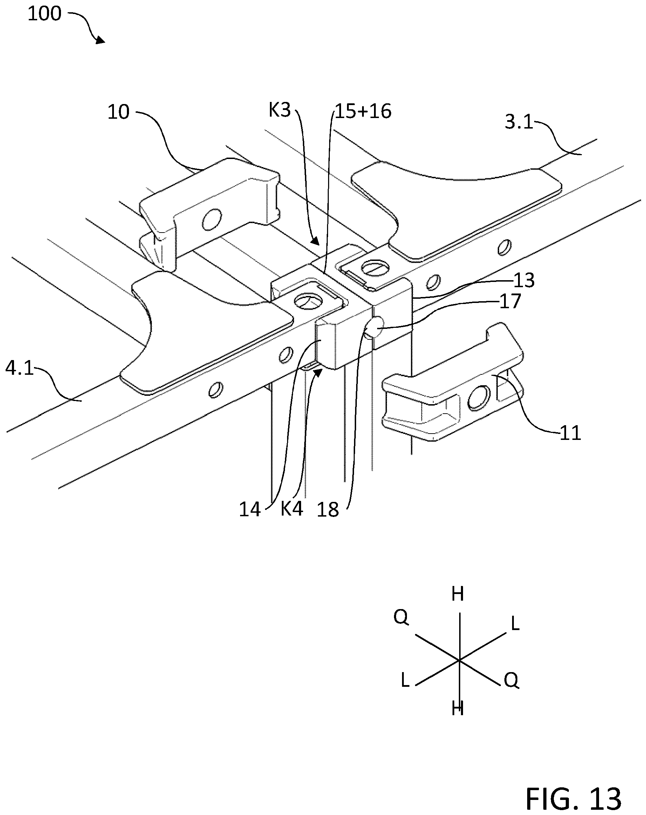

Figur 13 zeigt ein Anschlussknoten-Konzept gemäß einer anderen Ausführungsform der Erfindung, gemäß dessen zumindest einige der unter Bezugnahme auf die Figuren 1 bis 7 beschriebenen Anschlussknoten K3 und K4 vorzugsweise ausgeführt werden können. Es sind Tragstrukturen T3, T4 möglich, die jeweils Anschlussknoten gemäß Figuren 8 bis 12 und Anschlussknoten gemäß Figur 13 aufweisen können.

Auch die in Figur 13 gezeigten benachbarten, ein Anschlussknoten-Paar bildende Anschlussknoten K3, K4 sind über eine Klemmverbindung lösbar miteinander verbunden.

Die Klemmverbindung umfasst zwei im Wesentlichen U-, Omega- oder C-förmige Klemmbacken 10 und 11. Die benachbarten Anschlussknoten K3, K4 können z. B. zur vorzugsweise passgenauen Anlage der Klemmbacken 10 und 11 zwei komplementär und somit ebenfalls im Wesentlichen U-, Omega- oder C-förmig geformte Kulissen 13 und 14 aufweisen, insbesondere zum sandwichförmigen Formschluss-Eingriff mit den Klemmbacken 10 und 11 im Wesentlichen in Längsrichtung L der Fahrzeugkonstruktion 100.

Die in Figur 13 gezeigten benachbarten Anschlussknoten K3, K4 sind aus jeweils einem im Wesentlichen U-, Omega- oder C-Profil gebildet und bilden zusammen eine im Wesentlichen H-Form, insbesondere bei Betrachtung in der Höhenrichtung H der Fahrzeugkonstruktion 100.

Der im Wesentlichen C- Omega- oder U-förmige Anschlussknoten K3 dient zur abschnittsweisen sandwichförmigen Aufnahme eines Längsträgersegments 3.1, wobei der C-, Omega- oder U-förmige Anschlussknoten K4 zur abschnittsweisen sandwichförmigen Aufnahme eines Längsträgersegments 4.1 dient.

Die Klemmbacken 10 und 11 sind über ein in Figur 13 nicht gezeigtes Spannelement (z. B. eine zentrale Spannschraube wie das Spannelement 12) im Wesentlichen in Querrichtung Q der Fahrzeugkonstruktion 100 zueinander hin beaufschlagbar, wodurch die benachbarten Anschlussknoten K3, K4 im Wesentlichen in Längsrichtung L der Fahrzeugkonstruktion 100 zueinander hin zu beaufschlagt werden können.

Die benachbarten Anschlussknoten K3, K4 bilden eine Durchlassöffnung 17 und 18 für das Spannelement, wobei das Spannelement durch die Durchlassöffnung 17, 18 geführt werden kann und zwar vorzugsweise so, dass es die benachbarten Anschlussknoten K3, K4 nicht kontaktiert.

Die Klemmbacken 10 und 11 erstrecken sich im Wesentlichen in Längsrichtung L der Fahrzeugkonstruktion 100, während sich das Spannelement im Wesentlichen in Querrichtung Q der Fahrzeugkonstruktion 100 erstreckt.

Zur Übertragung von im Einsatz der Fahrzeugkonstruktion 100 erzeugten Druckkräften können die benachbarten Anschlussknoten K3, K4 innenliegende, sich kontaktierende Stirnseiten 15 und 16 aufweisen.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können. Im Kontext der Erfindung kann z. B. an einem ersten (zweckmäßig inneren) Knoten ein Stabelement (z. B. ähnlich einer Schraube, vorzugsweise mit Gewinde) ausgebildet sein, z. B. angegossen oder angeschmiedet sein. Außenseitig kann z. B. ein Gewinde ausgebildet sein und ein zweiter (zweckmäßig äußerer) Knoten kann zweckmäßig mit dem Stabelement verbunden werden. Die Erfindung ist nicht auf die oben beschriebenen bevorzugten Ausführungsformen beschränkt.

### Bezugszeichenliste

- 1: Vorderachsmodul
- 2: Hinterachsmodul

- T3: Tragstruktur
- 3.1 bis 3.4: Längsträgersegmente
- 3.5 bis 3.8: Querträgersegmente
- 3.9 bis 3.12: Vertikalträgersegmente
- K3: Anschlussknoten

- T4: Tragstruktur
- 4.1 bis 4.4: Längsträgersegmente
- 4.5 bis 4.8: Querträgersegmente
- 4.9 bis 4.12: Vertikalträgersegmente
- 4.13: Diagonalverstrebung, insbesondere Diagonalträgersegment
- K4: Anschlussknoten

- 5: Modul zur Aufnahme einer Nutzfahrzeug-Kabine

- 10: Klemmbacke
- 11: Klemmbacke
- 12: Spannelement
- 13: Kulisse(n)
- 14: Kulissen(n)
- 15: Stirnseite
- 16: Stirnseite
- 17: Durchlassöffnung
- 18: Durchlassöffnung
- 19: Anschlusseinrichtung
- 20: Anschlusseinrichtung
- 21: Anbindungsstruktur
- 22: Anbindungsstruktur
- 23: Formschluss
- 50: Montagestruktur, z. B. eines Fahrzeugaufbaus
- 51: Montagestruktur, z. B. einer Fahrzeugbatterie und/oder Fahrzeugtanks
- PF: Lastfluss, insbesondere in Längsrichtung der Fahrzeugkonstruktion

- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), nämlich modular aufgebautes Fahrzeug-Chassis (100), mit zumindest zwei Tragstrukturen (T3, T4), die jeweils zumindest einen Anschlussknoten (K3, K4) aufweisen, wobei die Tragstrukturen (T3, T4) benachbarte Anschlussknoten (K3, K4) aufweisen und die benachbarten Anschlussknoten (K3, K4) über eine Klemmverbindung vorzugsweise lösbar miteinander verbunden sind, wobei die benachbarten Anschlussknoten (K3, K4) jeweils zumindest eine Anschlusseinrichtung (19, 20) zum Anschließen eines Längsträgersegments (3.1-3.4, 4.1-4.4) und eines Vertikalträgersegments (3.9-3.12, 4.9-4.12) aufweisen, **dadurch gekennzeichnet, dass** die Klemmverbindung zwei Klemmbacken (10, 11) und zumindest ein Spannelement (12) umfasst, und die zwei Klemmbacken (10, 11) über das Spannelement (12) zueinander hin beaufschlagbar sind und/oder das Spannelement (12) sich im Wesentlichen in Querrichtung (Q) der Fahrzeugkonstruktion (100) erstreckt.

2. Fahrzeugkonstruktion (100) nach Anspruch 1, **dadurch gekennzeichnet, dass** die zumindest eine Anschlusseinrichtung (19, 20) ferner zum Anschließen eines Querträgersegments (3.5-3.8, 4.5-4.8) ausgebildet ist.

3. Fahrzeugkonstruktion (100) nach Anspruch 1 oder 2, **dadurch gekennzeichnet, dass** die zwei Klemmbacken (10, 11) U-, Omega- oder C-förmig ausgebildet sind und/oder einen Formschluss mit den benachbarten Anschlussknoten (K3, K4) im Wesentlichen in Längsrichtung (L) der Fahrzeugkonstruktion (100) bilden.

4. Fahrzeugkonstruktion (100) nach einem der vorhergehenden Ansprüche, **dadurch gekennzeichnet, dass** zumindest einer der Klemmbacken (10, 11) einen Formschluss (23) mit zumindest einem der benachbarten Anschlussknoten (K3, K4) im Wesentlichen in Höhenrichtung (H) der Fahrzeugkonstruktion (100) bildet.

5. Fahrzeugkonstruktion (100) nach einem der vorhergehenden Ansprüche, **dadurch gekennzeichnet, dass** das Spannelement (12) die zwei Klemmbacken (10, 11) im Wesentlichen in Querrichtung (Q) der Fahrzeugkonstruktion (100) zueinander hin beaufschlagt und/oder die zwei Klemmbacken (10, 11) die benachbarten Anschlussknoten (K3, K4) im Wesentlichen in Längsrichtung (L) der Fahrzeugkonstruktion (100) zueinander hin beaufschlagen.

6. Fahrzeugkonstruktion (100) nach einem der vorhergehenden Ansprüche, **dadurch gekennzeichnet, dass** die benachbarten Anschlussknoten (K3, K4) zur Anlage der Klemmbacken (10, 11) zwei komplementär geformte Kulissen (13, 14) bilden und vorzugsweise die Kulissen (13, 14) mit den Klemmbacken (10, 11) eine Kraftumlenkung erzeugen, um die benachbarten Anschlussknoten (K3, K4) zueinander hin zu beaufschlagen.

7. Fahrzeugkonstruktion (100) nach einem der vorhergehenden Ansprüche, **dadurch gekennzeichnet, dass** die Klemmbacken (10,11) tragstrukturell zur Übertragung von im Einsatz der Fahrzeugkonstruktion (100) erzeugten Zugkräften im Wesentlichen in Längsrichtung (L) der Fahrzeugkonstruktion (100) dienen.

8. Fahrzeugkonstruktion (100) nach einem der vorhergehenden Ansprüche, **dadurch gekennzeichnet, dass** die benachbarten Anschlussknoten (K3, K4) innenliegende Stirnseiten (15, 16) aufweisen und die innenliegenden Stirnseiten (15, 16) tragstrukturell miteinander in Verbindung bringbar sind, zur Übertragung von im Einsatz der Fahrzeugkonstruktion (100) erzeugten Druckkräften im Wesentlichen in Längsrichtung (L) der Fahrzeugkonstruktion (100) dienen.

9. Fahrzeugkonstruktion (100) nach einem der vorhergehenden Ansprüche, **dadurch gekennzeichnet, dass** die benachbarten Anschlussknoten (K3, K4) eine Durchlassöffnung (17, 18) für das Spannelement (12) bilden und das Spannelement (12) durch die Durchlassöffnung (17, 18) geführt ist, vorzugsweise ohne die benachbarten Anschlussknoten (K3, K4) zu kontaktieren.

10. Fahrzeugkonstruktion (100) nach Anspruch 9, **dadurch gekennzeichnet, dass** die Durchlassöffnung (17, 18) und die innenliegenden Stirnseiten (15, 16) sich benachbart und parallel zueinander erstrecken.

11. Fahrzeugkonstruktion (100) nach einem der vorhergehenden Ansprüche, **dadurch gekennzeichnet, dass** die Klemmbacken (10, 11) sich im Wesentlichen in Längsrichtung (L) der Fahrzeugkonstruktion (100) erstrecken.

12. Fahrzeugkonstruktion (100) nach einem der vorhergehenden Ansprüche, **dadurch gekennzeichnet, dass** die benachbarten Anschlussknoten (K3, K4) jeweils aus einem U-, Omega- oder C-Profil gebildet sind, zusammen eine H-Form bilden und/oder zur abschnittsweisen sandwichförmigen Aufnahme eines Längsträgersegments (3.1-3.4, 4.1-4.4), Querträgersegments (3.5-3.8, 4.5-4.8) und/oder Vertikalträgersegments (3.9-3.12, 4.9-4.12) dienen.

13. Fahrzeugkonstruktion (100) nach einem der vorhergehenden Ansprüche, **dadurch gekennzeichnet, dass** die Tragstrukturen (T3, T4) jeweils ein Fahrzeug-Chassis-Modul bilden.

14. Fahrzeugkonstruktion (100) nach einem der vorhergehenden Ansprüche, **dadurch gekennzeichnet, dass** die Tragstrukturen (T3, T4) in Querrichtung (Q) der Fahrzeugkonstruktion (100) voneinander beabstandete Längsträgersegmente (3.1-3.4, 4.1-4.4) umfassen, und die Längsträgersegmente (3.1-3.4, 4.1-4.4) der Tragstrukturen (T3, T4) über benachbarte Anschlussknoten (K3, K4) miteinander verbunden sind und in Querrichtung (Q) der Fahrzeugkonstruktion (100) voneinander beabstandete Chassis-Längsträgerkonstruktionen bilden.

15. Fahrzeugkonstruktion (100) nach einem der vorhergehenden Ansprüche, **dadurch gekennzeichnet, dass** die Tragstrukturen (T3, T4) über vier Anschlussknoten-Paare (K3, K4) lösbar miteinander verbunden sind und zumindest zwei Anschlussknoten-Paare (K3, K4) über die Klemmverbindung miteinander verbunden sind.

16. Fahrzeugkonstruktion (100) nach einem der vorhergehenden Ansprüche, **dadurch gekennzeichnet, dass** die benachbarten Anschlussknoten (K3, K4) jeweils zumindest eine Anbindungsstruktur (21, 22) zur Anbindung einer Montagestruktur (50, 51) eines Fahrzeugaufbaus und/oder zur Anbindung einer Montagestruktur (50, 51) einer Fahrzeugbatterie oder eines Fahrzeugtanks umfasst.

17. Fahrzeugkonstruktion (100) nach Anspruch 16, **dadurch gekennzeichnet, dass** die Montagestruktur (50, 51) an beide benachbarte Anschlussknoten (K3, K4) montiert ist.

18. Fahrzeugkonstruktion (100) nach Anspruch 16 oder 17, wenn abhängig von Anspruch 3, **dadurch gekennzeichnet, dass** die Montagestruktur (50, 51) das Spannelement (12) überbrückt.

19. Fahrzeugkonstruktion (100) nach einem der Ansprüche 16 bis 18, **dadurch gekennzeichnet, dass** zumindest eine Anbindungsstruktur (21, 22) im Wesentlichen in Querrichtung (Q) und/oder Höhenrichtung (H) der Fahrzeugkonstruktion (100) ausgerichtet ist und vorzugsweise zumindest ein Montageloch umfasst.

20. Fahrzeugkonstruktion (100) nach einem der vorhergehenden Ansprüche, **dadurch gekennzeichnet, dass** einer der Klemmbacken (10) unlösbar und/oder einstückig integral an einem der benachbarten Anschlussknoten (K3, K4) ausgebildet ist.

21. Nutzfahrzeug, vorzugsweise Lastkraftwagen, mit einer Fahrzeugkonstruktion (100) nach einem der vorhergehenden Ansprüche.

## Claims

1. Vehicle construction (100), specifically vehicle chassis (100) of modular construction, having at least two supporting structures (T3, T4) which each have at least one connector node (K3, K4), wherein the supporting structures (T3, T4) have adjacent connector nodes (K3, K4) and the adjacent connector nodes (K3, K4) are connected via a clamping connection to one another preferably in a releasable manner, wherein the adjacent connector nodes (K3, K4) each have at least one connector device (19, 20) for connection of a longitudinal member segment (3.1-3.4, 4.1-4.4) and of a vertical member segment (3.9-3.12, 4.9-4.12), **characterized in that** the clamping connection comprises two clamping jaws (10, 11) and at least one clamping element (12), and the two clamping jaws (10, 11) are able to be loaded towards one another via the clamping element (12) and/or the clamping element (12) extends substantially in a transverse direction (Q) of the vehicle construction (100).

2. Vehicle construction (100) according to Claim 1, **characterized in that** the at least one connector device (19, 20) is furthermore configured for connection of a crossmember segment (3.5-3.8, 4.5-4.8) .

3. Vehicle construction (100) according to Claim 1 or 2, **characterized in that** the two clamping jaws (10, 11) are of U-shaped, omega-shaped or C-shaped form and/or form a form fit with the adjacent connector nodes (K3, K4) substantially in a longitudinal direction (L) of the vehicle construction (100).

4. Vehicle construction (100) according to one of the preceding claims, **characterized in that** at least one of the clamping jaws (10, 11) forms a form fit (23) with at least one of the adjacent connector nodes (K3, K4) substantially in a height direction (H) of the vehicle construction (100).

5. Vehicle construction (100) according to one of the preceding claims, **characterized in that** the clamping element (12) loads the two clamping jaws (10, 11) towards one another substantially in a transverse direction (Q) of the vehicle construction (100), and/or the two clamping jaws (10, 11) load the adjacent connector nodes (K3, K4) towards one another substantially in a longitudinal direction (L) of the vehicle construction (100).

6. Vehicle construction (100) according to one of the preceding claims, **characterized in that**, for abutment with the clamping jaws (10, 11), the adjacent connector nodes (K3, K4) form two slotted guides (13, 14) of complementary form, and preferably the slotted guides (13, 14) generate with the clamping jaws (10, 11) a force deflection, in order for the adjacent connector nodes (K3, K4) to be loaded towards one another.

7. Vehicle construction (100) according to one of the preceding claims, **characterized in that** the clamping jaws (10, 11) serve, in supporting-structure-related terms, for transmission substantially in a longitudinal direction (L) of the vehicle construction (100) of tensile forces generated during the use of the vehicle construction (100).

8. Vehicle construction (100) according to one of the preceding claims, **characterized in that** the adjacent connector nodes (K3, K4) have inner end faces (15, 16), and the inner end faces (15, 16) are able to be brought into connection with one another in supporting-structure-related terms and serve for transmission substantially in a longitudinal direction (L) of the vehicle construction (100) of compressive forces generated during the use of the vehicle construction (100).

9. Vehicle construction (100) according to one of the preceding claims, **characterized in that** the adjacent connector nodes (K3, K4) form a passage opening (17, 18) for the clamping element (12), and the clamping element (12) is guided through the passage opening (17, 18), preferably without making contact with the adjacent connector nodes (K3, K4).

10. Vehicle construction (100) according to Claim 9, **characterized in that** the passage opening (17, 18) and the inner end faces (15, 16) extend adjacently and parallel to one another.

11. Vehicle construction (100) according to one of the preceding claims, **characterized in that** the clamping jaws (10, 11) extend substantially in a longitudinal direction (L) of the vehicle construction (100).

12. Vehicle construction (100) according to one of the preceding claims, **characterized in that** the adjacent connector nodes (K3, K4) are each formed from a U-shaped, omega-shaped or C-shaped profile, together form an H-shaped form and/or serve for sectionally sandwich-shaped receiving of a longitudinal member segment (3.1-3.4, 4.1-4.4), crossmember segment (3.5-3.8, 4.5-4.8) and/or vertical member segment (3.9-3.12, 4.9-4.12).

13. Vehicle construction (100) according to one of the preceding claims, **characterized in that** the supporting structures (T3, T4) each form a vehicle-chassis module.

14. Vehicle construction (100) according to one of the preceding claims, **characterized in that** the supporting structures (T3, T4) comprise longitudinal member segments (3.1-3.4, 4.1-4.4) which are spaced apart from one another in a transverse direction (Q) of the vehicle construction (100), and the longitudinal member segments (3.1-3.4, 4.1-4.4) of the supporting structures (T3, T4) are connected to one another via adjacent connector nodes (K3, K4) and form chassis longitudinal member constructions which are spaced apart from one another in a transverse direction (Q) of the vehicle construction (100).

15. Vehicle construction (100) according to one of the preceding claims, **characterized in that** the supporting structures (T3, T4) are releasably connected to one another via four pairs of connector nodes (K3, K4), and at least two pairs of connector nodes (K3, K4) are connected to one another via the clamping connection.

16. Vehicle construction (100) according to one of the preceding claims, **characterized in that** the adjacent connector nodes (K3, K4) each comprise at least one attachment structure (21, 22) for attachment of a mounting structure (50, 51) of a vehicle body and/or for attachment of a mounting structure (50, 51) of a vehicle battery or of a vehicle tank.

17. Vehicle construction (100) according to Claim 16, **characterized in that** the mounting structure (50, 51) is mounted on both adjacent connector nodes (K3, K4) .

18. Vehicle construction (100) according to Claim 16 or 17, if dependent on Claim 3, **characterized in that** the mounting structure (50, 51) bridges the clamping element (12).

19. Vehicle construction (100) according to one of Claims 16 to 18, **characterized in that** at least one attachment structure (21, 22) is oriented substantially in a transverse direction (Q) and/or height direction (H) of the vehicle construction (100) and preferably comprises at least one mounting hole.

20. Vehicle construction (100) according to one of the preceding claims, **characterized in that** one of the clamping jaws (10) is formed in a non-releasable manner and/or integrally in one piece on one of the adjacent connector nodes (K3, K4).

21. Utility vehicle, preferably a lorry, having a vehicle construction (100) according to one of the preceding claims.

## Revendications

1. Structure de véhicule (100), à savoir châssis de véhicule (100) conçu de manière modulaire, comprenant au moins deux structures porteuses (T3, T4), qui présentent respectivement au moins un noeud de raccordement (K3, K4), les structures porteuses (T3, T4) présentant des noeuds de raccordement adjacents (K3, K4) et les noeuds de raccordement adjacents (K3, K4) étant reliés les uns aux autres de préférence de manière amovible par le biais d'une liaison serrée, les noeuds de raccordement adjacents (K3, K4) présentant respectivement au moins un dispositif de raccordement (19, 20) servant au raccordement d'un segment de longeron (3.1-3.4, 4.1-4.4) et d'un segment de support vertical (3.9-3.12, 4.9-4.12), **caractérisée en ce que** la liaison serrée comporte deux mâchoires de serrage (10, 11) et au moins un élément de serrage (12), et les deux mâchoires de serrage (10, 11) peuvent être sollicitées l'une vers l'autre par le biais de l'élément de serrage (12) et/ou l'élément de serrage (12) s'étend sensiblement dans la direction transversale (Q) de la structure de véhicule (100).

2. Structure de véhicule (100) selon la revendication 1, **caractérisée en ce que** l'au moins un dispositif de raccordement (19, 20) est en outre réalisé pour le raccordement d'un segment de traverse (3.5-3.8, 4.5-4.8).

3. Structure de véhicule (100) selon la revendication 1 ou 2, **caractérisée en ce que** les deux mâchoires de serrage (10, 11) sont réalisées en forme de U, d'oméga ou de C et/ou forment un engagement par complémentarité de formes avec les noeuds de raccordement adjacents (K3, K4) sensiblement dans la direction longitudinale (L) de la structure de véhicule (100).

4. Structure de véhicule (100) selon l'une des revendications précédentes, **caractérisée en ce qu'**au moins l'une des mâchoires de serrage (10, 11) forme un engagement par complémentarité de formes (23) avec au moins l'un des noeuds de raccordement adjacents (K3, K4) sensiblement dans la direction verticale (H) de la structure de véhicule (100).

5. Structure de véhicule (100) selon l'une des revendications précédentes, **caractérisée en ce que** l'élément de serrage (12) sollicite les deux mâchoires de serrage (10, 11) l'une vers l'autre sensiblement dans la direction transversale (Q) de la structure de véhicule (100) et/ou les deux mâchoires de serrage (10, 11) sollicitent les noeuds de raccordement adjacents (K3, K4) les uns vers les autres sensiblement dans la direction longitudinale (L) de la structure de véhicule (100).

6. Structure de véhicule (100) selon l'une des revendications précédentes, **caractérisée en ce que** les noeuds de raccordement adjacents (K3, K4) forment, pour l'appui des mâchoires de serrage (10, 11), deux coulisses (13, 14) formées de manière complémentaire et de préférence les coulisses (13, 14) produisent avec les mâchoires de serrage (10, 11) une déviation de force, afin de solliciter les noeuds de raccordement adjacents (K3, K4) les uns vers les autres.

7. Structure de véhicule (100) selon l'une des revendications précédentes, **caractérisée en ce que** les mâchoires de serrage (10, 11) servent structuralement à la transmission de forces de traction produites lors de l'utilisation de la structure de véhicule (100) sensiblement dans la direction longitudinale (L) de la structure de véhicule (100).

8. Structure de véhicule (100) selon l'une des revendications précédentes, **caractérisée en ce que** les noeuds de raccordement adjacents (K3, K4) présentent des côtés frontaux intérieurs (15, 16) et les côtés frontaux intérieurs (15, 16) peuvent être amenés en liaison les uns avec les autres structuralement, pour la transmission de forces de compression produites lors de l'utilisation de la structure de véhicule (100) sensiblement dans la direction longitudinale (L) de la structure de véhicule (100) .

9. Structure de véhicule (100) selon l'une des revendications précédentes, **caractérisée en ce que** les noeuds de raccordement adjacents (K3, K4) forment une ouverture de passage (17, 18) pour l'élément de serrage (12) et l'élément de serrage (12) est guidé à travers l'ouverture de passage (17, 18), de préférence sans venir en contact avec les noeuds de raccordement adjacents (K3, K4).

10. Structure de véhicule (100) selon la revendication 9, **caractérisée en ce que** l'ouverture de passage (17, 18) et les côtés frontaux intérieurs (15, 16) s'étendent de manière adjacente et parallèle les uns aux autres.

11. Structure de véhicule (100) selon l'une des revendications précédentes, **caractérisée en ce que** les mâchoires de serrage (10, 11) s'étendent sensiblement dans la direction longitudinale (L) de la structure de véhicule (100).

12. Structure de véhicule (100) selon l'une des revendications précédentes, **caractérisée en ce que** les noeuds de raccordement adjacents (K3, K4) sont formés respectivement à partir d'un profilé en U, en oméga ou en C, forment ensemble une forme en H et/ou servent à la réception dans certaines zones, en forme de sandwich, d'un segment de longeron (3.1-3.4, 4.1-4.4), d'un segment de traverse (3.5-3.8, 4.5-4.8) et/ou d'un segment de support vertical (3.9-3.12, 4.9-4.12).

13. Structure de véhicule (100) selon l'une des revendications précédentes, **caractérisée en ce que** les structures porteuses (T3, T4) forment respectivement un module de châssis de véhicule.

14. Structure de véhicule (100) selon l'une des revendications précédentes, **caractérisée en ce que** les structures porteuses (T3, T4) comportent des segments de longeron (3.1-3.4, 4.1-4.4) espacés les uns des autres dans la direction transversale (Q) de la structure de véhicule (100), et les segments de longeron (3.1-3.4, 4.1-4.4) des structures porteuses (T3, T4) sont reliés les uns aux autres par le biais de noeuds de raccordement adjacents (K3, K4) et forment des structures de longeron de châssis espacées les unes des autres dans la direction transversale (Q) de la structure de véhicule (100).

15. Structure de véhicule (100) selon l'une des revendications précédentes, **caractérisée en ce que** les structures porteuses (T3, T4) sont reliées les unes aux autres de manière amovible par le biais de quatre paires de noeuds de raccordement (K3, K4) et au moins deux paires de noeuds de raccordement (K3, K4) sont reliées les unes aux autres par le biais de la liaison serrée.

16. Structure de véhicule (100) selon l'une des revendications précédentes, **caractérisée en ce que** les noeuds de raccordement adjacents (K3, K4) comportent respectivement au moins une structure de connexion (21, 22) servant à la connexion d'une structure de montage (50, 51) d'une carrosserie de véhicule et/ou à la connexion d'une structure de montage (50, 51) d'une batterie de véhicule ou d'un réservoir de véhicule.

17. Structure de véhicule (100) selon la revendication 16, **caractérisée en ce que** la structure de montage (50, 51) est montée sur les deux noeuds de raccordement adjacents (K3, K4).

18. Structure de véhicule (100) selon la revendication 16 ou 17, lorsqu'elle dépend de la revendication 3, **caractérisée en ce que** la structure de montage (50, 51) surmonte l'élément de serrage (12).

19. Structure de véhicule (100) selon l'une des revendications 16 à 18, **caractérisé en ce qu'**au moins une structure de connexion (21, 22) est orientée sensiblement dans la direction transversale (Q) et/ou la direction verticale (H) de la structure de véhicule (100) et comporte de préférence au moins un trou de montage.

20. Structure de véhicule (100) selon l'une des revendications précédentes, **caractérisée en ce que** l'une des mâchoires de serrage (10) est réalisée de manière non amovible et/ou d'une seule pièce intégralement sur l'un des noeuds de raccordement adjacents (K3, K4).

21. Véhicule utilitaire, de préférence poids lourd, comprenant une structure de véhicule (100) selon l'une des revendications précédentes.
